# EUROPEAN PATENT APPLICATION

(11) **EP 1 302 231 A1**
(43) Date of publication of application: **16.04.2003**
(21) Application number: 00944406.8
(22) Date of filing: 12.07.2000
(51) Int. Cl.: B01D 39/20, B01D 46/00

(54) **HONEYCOMB FILTER HAVING MULTI-LAYER STRUCTURE AND METHOD FOR MANUFACTURING THE SAME**

(71) Applicant: NGK INSULATORS, LTD., Nagoya-City Aichi 467-8530 (JP)
(72) Inventor: SAKON, Atsushi, Nagoya-city, Aichi 467-8530 (JP)
(74) Representative: Paget, Hugh Charles Edward
(86) International application number: JP0004640
(87) International publication number: WO02004092

(57) **Abstract**

There is provided a multilayered honeycomb filter for collecting dust comprising a support having a honeycomb structure and one or two or more filter layers on the surface of the support. The filter layer is composed of ceramic particles having an average particle diameter different from that of ceramic particles constituting the support. The average particle diameter of the filter layer in contact with the support is not smaller than 3/5 times and not larger than 1 times an average pore diameter of the support. And an average thickness of the filter layer in contact with the support is not larger than 7 times the average particle diameter of the filter layer. This multilayered honeycomb filter has high collecting efficiency, a small pressure loss, and a low buildup rate of pressure loss.

## Description

### Technical Field

The present invention relates to a dust-collecting multilayered honeycomb filter for collecting dust in a gas to be treated and a manufacturing method therefor.

### Background Art

A dust-collecting honeycomb filter has been used in a variety of fields including industries relating to chemistry, electric power, steel, and automobile for the purpose of recovery of products from high-temperature gas, removal of dust from exhaust gas for environmental protection, etc.

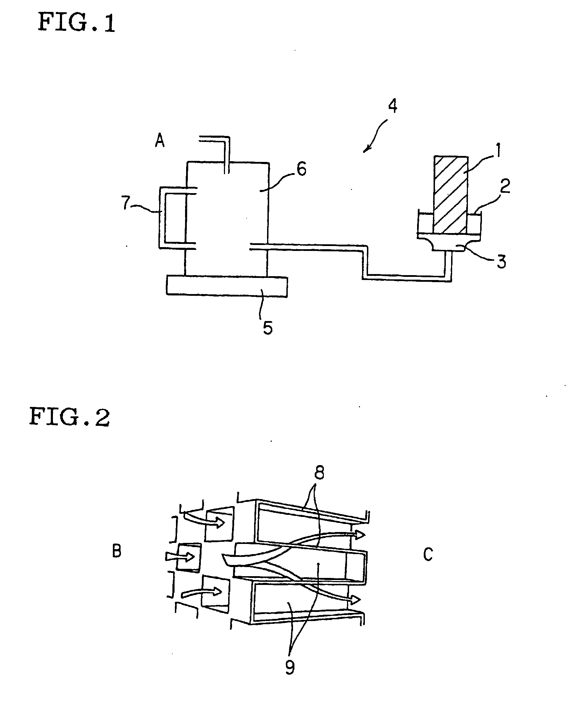

Such a honeycomb filter has a structure in which many through holes 9 of a honeycomb are closed alternately at ends of the upstream side B and the downstream side C as shown in Figure 2. A high-temperature gas entering from the upstream side B passes through porous walls 8 and flows out from holes on the downstream side C. At this time, dust in the high-temperature gas is collected in pores in the wall.

In the above-described honeycomb filter, from the viewpoint of increased collecting efficiency, it is advantageous to increase the thickness of wall and to decrease the pore diameter of wall. On the other hand, from the viewpoint of decreased pressure loss, it is advantageous to decrease the thickness of wall and to increase the pore diameter of wall. Therefore, in order to realize a small pressure loss while increasing the collecting efficiency, a filter layer with an average pore diameter smaller than that of a support is usually provided on the surface of the support of a honeycomb structure having a relatively large average pore diameter.

As a method for forming such a filter layer, there are conventionally known a dynamic pressurized and vacuum method (Japanese Patent Laid-Open No. 61-238315) in which one end side of a porous support whose pores are saturated with a liquid is decompressed, and slurry containing ceramic particles is supplied from the other end side; an air flow coating method (Japanese Patent Laid-Open No. 10-249124) in which after powder composed of ceramic particles is attached to the surface of a porous body in an air flow, water is applied to adsorb the powder; a slurry inpour/drain method in which after slurry containing ceramic particles is brought into contact with and held on the surface of a porous body, the slurry is drained; a dipping method in which a porous body is dipped in slurry composed of ceramic particle powder; a slurry direct-filtration method in which slurry composed of ceramic particle powder is supplied to each cell of a porous honeycomb structure, and water in the slurry is removed by penetrating through the porous portion, by which ceramic particles are attached to the surface of honeycomb structure, and other methods.

However, the dynamic pressure vacuum method is difficult to apply to a support having an intricate shape such as a honeycomb structure. The application of this method to a support having an intricate shape requires complicated equipment and thus is undesirable in terms of production efficiency and manufacturing cost.

Also, the air flow coating method has a problem in that since ceramic particles become large particle in a condensed state and adheres to the support, the average pore diameter of a filter layer increases, so that it is difficult to realize high collecting efficiency, and also clogging occurs, so that the buildup rate of pressure loss increases.

Also, the slurry inpour/drain method and the dipping method have a problem in that the coat thickness is difficult to control, and therefore the degree of the collecting efficiency and pressure loss vary between filters.

Also, the slurry direct-filtration method has a problem in that if an attempt is made to form a filter layer by using ceramic particles having a small average particle diameter, the ceramic particles penetrate into pores in a support to form a mixed layer thereof having a dense structure between the support and the filter layer, which increases the pressure loss.

Further, conventionally, a dust-collecting honeycomb filter that fully satisfies all of high collecting efficiency, small pressure loss, and low buildup rate of pressure loss has not yet been obtained, and thus the development of such a honeycomb filter has been anticipated.

Accordingly, an object of the present invention is to provide a multilayered honeycomb filter having high collecting efficiency, a small pressure loss, and a low buildup rate of pressure loss, and a manufacturing method for a multilayered honeycomb filter, which can manufacture such a multilayered honeycomb filter easily by using a simple apparatus, and so as not to vary in the quality between filters.

### Disclosure of the Invention

According to the present invention, there is provided a multilayered honeycomb filter for collecting dust comprising a support having a honeycomb structure and one or two or more filter layers on the surface of the support, the filter layer being composed of ceramic particles having an average particle diameter different from that of ceramic particles constituting the support, wherein the average particle diameter of the filter layer in contact with the support is not smaller than 3/5 times and not larger than 1 times an average pore diameter of the support, and an average thickness of the filter layer in contact with the support is not larger than 7 times the average particle diameter of the filter layer.

Also, according to the present invention, there is provided a manufacturing method for a multilayered honeycomb filter comprising steps of; into each cell of a support having a honeycomb structure, supplying slurry of ceramic particles having an average particle diameter not smaller than 3/5 times and not larger than 1 times an average pore diameter of the support; removing water in the slurry by causing the water to penetrate into pores in the support, and attaching the ceramic particles on a surface of the support; and forming a filter layer on the surface of the support by firing.

### Brief Description of the Drawings

Figure 1 is a schematic view showing an example of a manufacturing method for a multilayered honeycomb filter in accordance with the present invention; and
Figure 2 is a perspective view showing general structure of a honeycomb filter.

### Best Mode for Carrying out the Invention

A multilayered honeycomb filter in accordance with the present invention is used for dust collection, and has a structure in which on the surface of a support having a honeycomb structure, there is provided one or two or more of filter layers composed of ceramic particles having an average particle diameter different from that of ceramic particles constituting the support. Of the above-described filter layers, the filter layer in contact with the support is controlled so as to have an average particle diameter not smaller than 3/5 times and not larger than 1 times an average pore diameter of the support. Also, an average thickness of the filter layer in contact with the support is controlled so as to be not larger than 7 times the average particle diameter of the filter layer.

By setting the average particle diameter and the average thickness of the filter layer in contact with the support in the above-described range, a multilayered honeycomb filter that satisfies all of high collecting efficiency, small pressure loss, and low buildup rate of pressure loss can be obtained.

If the average particle diameter of the filter layer in contact with the support is smaller than 3/5 times the average pore diameter of the support, although the collecting efficiency is high, the pressure loss is large. If the average particle diameter of the filter layer in contact with the support exceeds 1 times the average pore diameter of the support, although the pressure loss is small, high collecting efficiency cannot be obtained. It is more preferable that the average particle diameter of the filter layer in contact with the support be not smaller than 4/5 times and not larger than 6/7 times the average pore diameter of the support.

Also, if the average thickness of the filter layer in contact with the support exceeds 7 times the average particle diameter of the filter layer itself, although the collecting efficiency is high, the pressure loss is large. It is more preferable that the average thickness of the filter layer in contact with the support be not smaller than 2 times and not larger than 5 times of the average particle diameter of the filter layer itself.

Further, in order to decrease the pressure loss, it is preferable to make a particle size distribution in the filter layer sharp by cutting fine particle fraction by classifying operation such as hydraulic elutriation.

In the multilayered honeycomb filter in accordance with the present invention, filter layers that are not in contact with the support, that is, the second and farther filter layers from the support are not restricted especially, but it is preferable that the relation of the (n+1)th layer with the (n)th layer follow the relation of the first layer with the support.

The multilayered honeycomb filter in accordance with the present invention is manufactured by a slurry direct-filtration method. Specifically, slurry of ceramic particles is supplied to each cell of the support having a honeycomb structure, and water in the slurry is removed by penetrating through the pores in the support, by which ceramic particles are attached to the surface of the support and then are fired. However, in the present invention, the average particle diameter of ceramic particles contained in the slurry is controlled so as to be not smaller than 3/5 times and not larger than 1 times the average pore diameter of the support.

By controlling the average particle diameter of ceramic particles contained in the slurry in the above-described range, a phenomenon that the ceramic particles penetrate into the pores in the support to form a mixed layer having a dense structure between the support and the filter layer, which increases the pressure loss as in the conventional slurry direct-filtration method can be avoided.

Also, since a balance between a precipitating property of slurry and an adhesive property of particles to the support is good, the thickness of filter layer can be fixed, so that the collecting efficiency and the degree of pressure loss can be made uniform between filters. Further, a simple apparatus suffice for manufacture, and this method is advantageous in terms of production efficiency and manufacturing cost.

The concentration (w/w) of ceramic particles in slurry is preferably not lower than 0.5% and lower than 2.0% from the viewpoint of balance between the precipitating property of slurry and the adhesive property of particles to the support, being further preferably not lower than 0.8% and lower than 1.5%.

Also, the volume of slurry is preferably not lower than 3 times and not higher than 6 times the total volume of cell to be coated. If it is lower than 3 times, a difference in filter layer thickness arises between the upper and lower parts of cell. If it exceeds 6 times, the balancing between the thickness of the filter layer and the concentration, and a large amount of slurry are required for the formation of filter layer, which cause difficulty in performing work.

The second and farther filter layers are formed in the same way as described above after the first filter layer has been fired.

In the present invention, by controlling the average particle diameter of ceramic particles in the slurry in a certain range, multilayered honeycomb filters having less variation of the collecting efficiency and the degree of pressure loss can be manufactured easily by using a simple apparatus. In addition, by making the thickness of filter layer in a certain range, a multilayered honeycomb filter having all of high collecting efficiency, small pressure loss, and low buildup rate of pressure loss can be provided.

Next, the present invention will be described in more detail by using examples shown in the figures. However, the present invention is not limited to these examples.

### (Example 1)

On a support having a honeycomb structure with a 500 mm length, whose end face has a square shape of 150 mm × 150 mm, a single filter layer with an average coat thickness of 50 µm, which is composed of ceramic particles with an average particle diameter of 10 µm, was provided by the slurry direct-filtration method, by which a multilayered honeycomb filter was manufactured. The average particle diameter of ceramic particles in the filter layer was set at 2/3 times the average pore diameter of the support, and the average thickness of the filter layer was set at 5 times the average particle diameter of the filter layer. As shown in Figure 2, the support has a structure in which ends of many through holes 9 of the honeycomb are closed alternately on the upstream side B and the downstream side C. The cell pitch of the support was 10 mm, and the materials of both of the support and the filter layer were cordierite. Also, the average pore diameter of the support was 15 µm.

The filter layer was formed using a treatment apparatus 4 shown in Figure 1. The treatment apparatus 4 is provided with a slurry tank 6 over a magnetic stirrer 5, and for supplying slurry in the slurry tank 6 to a support 1 by a pressure of air A. Herein, instead of the air pressure, a pump etc. may be used to supply the slurry.

The slurry tank 6 serves to prepare slurry of ceramic particles having a predetermined concentration. Slurry having a uniform concentration is prepared by the stirring action of the magnetic stirrer 5. The prepared slurry is supplied to one end side of the support 1 connected to a slurry injection element 3 via an attachment jig 2, and is introduced into the interior thereof through the opening of cell on one side. The quantity of supplied slurry is monitored with a level gage 7 provided on the slurry tank 6, and the supply of slurry is stopped at the time when the quantity of supplied slurry reaches a predetermined value. Subsequently, the support 1 is turned over to compulsorily drain filtered water in the support by an air pressure.

Water in the introduced slurry successively penetrates through a wall of each cell and flows out to the outside. During this time, particles in the slurry successively adhere to one side face of wall to form a layer composed of particles.

Slurry was prepared by adding an organic binder in advance and by stirring and mixing the slurry in a plastic vessel by using a homomixer.

After the layer composed of ceramic particles are formed in this manner, the support provided with the layer was dried, and fired at 1350°C for two hours, by which a filter layer was formed.

The filter layer was formed over an area of 17,172 cm² on the support, the total volume of coated cell being 3692 cm³.

On the above-described honeycomb filter, the pressure loss, the uniformity of filter layer thickness, the stability of filter layer, and the collecting efficiency were measured. The measurement was made as follows.

### (Measurement method for pressure loss)

The pressures at the inlet and outlet at the time when normal-temperature air was caused to flow at a flow velocity of 1 m/min (flow volume conversion: 1 m/min × 1.71 m² = 1.71 m³/min) were measured, and the difference therebetween was calculated.

### (Measurement method for uniformity of filter layer thickness)

The thicknesses of filter layer at arbitrary positions were measured, and the variation thereof was evaluated.

### (Measurement method for stability of filter layer)

The reproducibility at the time when many filter layers were formed under the same conditions was evaluated.

### (Measurement method for collecting efficiency)

The particle collecting rate at the time when a gas containing particles having a predetermined average particle diameter is caused to flow was measured, and calculation was performed by equation, (1 - (outlet particle concentration)/(inlet particle concentration)).

Table 1 gives the results of above-described measurement and various parameters such as slurry concentration and slurry amount. In Table 1, "slurry concentration" means a ratio of the weight of ceramic particles to the weight of slurry, and "slurry amount" means the volume of slurry used for the filter layer. Also, "multiple" means a value obtained by dividing "slurry amount" by the total volume of coated cell, and "amount of added binder" means a ratio of the weight of binder added at the time of slurry preparation to the weight of ceramic particles. Also, in Table 1, "D" means the average pore diameter of the support, the value thereof being 15 µm.

### (Examples 2 to 10)

A single filter layer was provided on a support having a honeycomb structure by the slurry direct-filtration method, in the same manner as in Example 1, by which a multilayered honeycomb filter was manufactured. However, the ratio of the average particle diameter of ceramic particles in the filter layer to the average pore diameter of the support, the ratio of the average thickness of the filter layer to the average particle diameter of the filter layer, the cell pitch of the support, etc. were changed appropriately from the conditions of Example 1.

For the support having a cell pitch of 6 mm, the filter layer was formed over an area of 30,760 cm², the total volume of coated cell being 4053 cm³.

On the above-described honeycomb filter, as in the case of Example 1, the pressure loss, the uniformity of filter layer thickness, the stability of filter layer, and the collecting efficiency were measured. Table 1 gives the results of the above-described measurement and various parameters including slurry concentration and slurry amount.

### (Comparative example 1)

A single filter layer with an average filter layer thickness of 25 µm, which was composed of ceramic particles with an average particle diameter of 7 µm, was provided on a support having a honeycomb structure by the slurry inpour/drain method, by which a multilayered honeycomb filter was manufactured. The average particle diameter of ceramic particles in the filter layer was set at 1/2 times the average pore diameter of the support, and the average thickness of the filter layer was set at 3.6 times the average particle diameter of the filter layer.

The filter layer was formed as described below.

Slurry was inpoured into a cell of the support in the state that the opening of cell, where a filter layer was to be formed, faced upward, and the support was held as it is for one minute. Subsequently, the slurry was drained by turning over the support. The slurry concentration was 20% by weight, the amount of inpoured slurry was 5010 cm³, and the amount of drained slurry was 3692 cm³. Also, no binder was added in preparing the slurry.

On the above-described honeycomb filter, as in the case of Example 1, the pressure loss, the uniformity of filter layer thickness, the stability of filter layer, and the collecting efficiency were measured. Table 1 gives the results of the above-described measurement and various parameters including slurry concentration and slurry amount.

### (Comparative example 2)

A single filter layer composed of ceramic particles with an average particle diameter of 7 µm was provided on a support having a honeycomb structure by the slurry direct-filtration/drain method, by which a multilayered honeycomb filter was manufactured. However, the average particle diameter of ceramic particles in the filter layer was set at 1/2 times the average pore diameter of the support. The average filter layer thickness could not be measured because it was very thin.

The filter layer was formed as described below.

Slurry was caused to penetrate into a cell of the support in the state that the opening of cell, where a filter layer was to be formed, faced downward, and was direct-filtrated for a while as it is. Subsequently, permeated water was drained by turning over the support, and then the slurry was drained by turning over the support again. The amount of inpoured slurry was 7384 cm³, the slurry concentration was 2% by weight, and the amount of drained slurry was 3692 cm³. The binder was added by 10 weight % in preparing the slurry.

On the above-described honeycomb filter, as in the case of Example 1, the pressure loss, the uniformity of filter layer thickness, the stability of filter layer, and the collecting efficiency were measured. Table 1 gives the results of the above-described measurement and various parameters including slurry concentration and slurry amount.

### (Comparative example 3)

A single filter layer was provided on a support having a honeycomb structure in the same manner as in Comparative example 2, by which a multilayered honeycomb filter was manufactured. However, the binder was added by 5 weight % in preparing the slurry.

On the above-described honeycomb filter, as in the case of Example 1, the pressure loss, the uniformity of filter layer thickness, the stability of filter layer, and the collecting efficiency were measured. Table 1 gives the results of the above-described measurement and various parameters including slurry concentration and slurry amount.

### (Comparative examples 4 to 15)

A single filter layer was provided on a support having a honeycomb structure by the slurry direct-filtration method in the same manner as in Example 1, by which a multilayered honeycomb filter was manufactured. However, the ratio of the average particle diameter of ceramic particles in the filter layer to the average pore diameter of the support, the ratio of the average thickness of the filter layer to the average particle diameter of the filter layer, the cell pitch of the support, etc. were changed appropriately from the conditions of Example 1.

For the support having a cell pitch of 6 mm, the filter layer was formed over an area of 30,760 cm², the total volume of coated cell being 4053 cm³.

On the above-described honeycomb filter, as in the case of Example 1, the pressure loss, the uniformity of filter layer thickness, the stability of filter layer, and the collecting efficiency were measured. Table 1 gives the results of the above-described measurement and various parameters including slurry concentration and slurry amount.

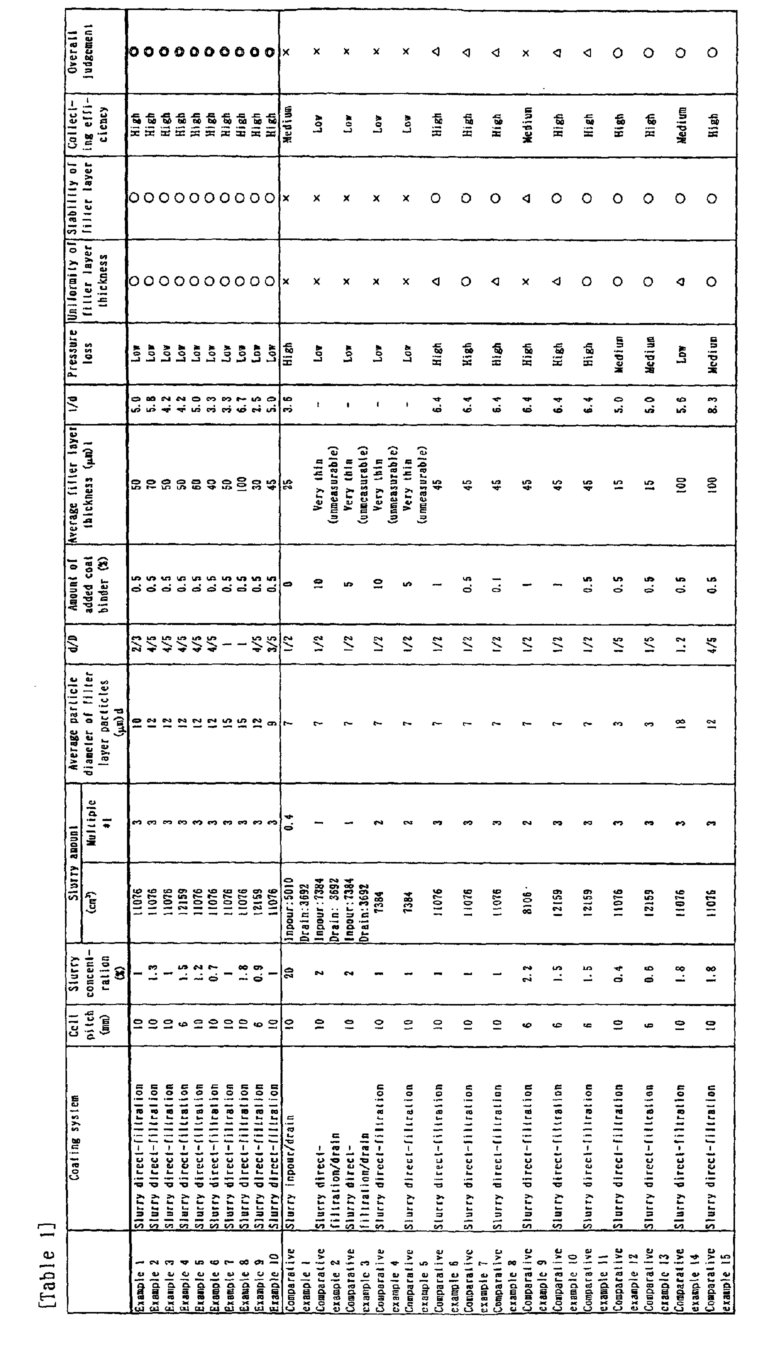

Table 1 reveals that all of the honeycomb filters of Examples fully satisfied the requirements of high collecting efficiency, small pressure loss, and low buildup rate of pressure loss, and had high stability of the coat layer, but in Comparative examples, there was no honeycomb filter that satisfied all of the above requirements.

### Industrial Applicability

The multilayered honeycomb filter in accordance with the present invention has high collecting efficiency, a small pressure loss, and a low buildup rate of pressure loss, and therefore, can be used suitably in fields including industries relating to chemistry, electric power, steel, and automobile.

Also, according to the manufacturing method in accordance with the present invention, a multilayered honeycomb filter can be manufactured easily using a simple apparatus without variations in quality between filters. Therefore, this manufacturing method contributes to improvement in manufacturing efficiency and reduction in production cost, and also can achieve further uniformity of product quality.

## Claims

1. A multilayered honeycomb filter for collecting dust comprising a support having a honeycomb structure and one or two or more filter layers on the surface of the support, the filter layer being composed of ceramic particles having an average particle diameter different from that of ceramic particles constituting the support, **characterized in that**
the average particle diameter of the filter layer in contact with the support is not smaller than 3/5 times and not larger than 1 times an average pore diameter of the support, and an average thickness of the filter layer in contact with the support is not larger than 7 times the average particle diameter of the filter layer.

2. The multilayered honeycomb filter according to claim 1, wherein the average particle diameter of the filter layer in contact with the support is not smaller than 4/5 times and not larger than 6/7 times the average pore diameter of the support.

3. The multilayered honeycomb filter according to claim 1, wherein the average thickness of the filter layer in contact with the support is not smaller than 3 times and not larger than 5 times the average particle diameter of the filter layer.

4. A manufacturing method for a multilayered honeycomb filter comprising steps of:
into each cell of a support having a honeycomb structure, supplying slurry of ceramic particles having an average particle diameter not smaller than 3/5 times and not larger than 1 times an average pore diameter of the support;
removing water in the slurry by causing the water to penetrate into pores in the support, and attaching the ceramic particles on a surface of the support; and
forming a filter layer on the surface of the support by firing.

5. The manufacturing method according to claim 4, wherein the multilayered honeycomb filter comprises a support having a honeycomb structure and one or two or more filter layers on the support, the filter layer being composed of ceramic particles having an average particle diameter different from that of ceramic particles constituting the support, the average particle diameter of the filter layer in contact with the support is not smaller than 3/5 times and not larger than 1 times an average pore diameter of the support, and an average thickness of the filter layer in contact with the support is not larger than 7 times the average particle diameter of the filter layer.

6. The manufacturing method according to claim 4, wherein the concentration of ceramic particles in the slurry is not lower than 0.5% and lower than 2.0%.

7. The manufacturing method according to claim 4, wherein a volume of the slurry is not lower than 3 times and not higher than 6 times a total volume of cell to be coated.
